(19) Europäisches Patentamt / European Patent Office / Office européen des brevets

(11) **EP 3 435 539 B1**

(12) **EUROPEAN PATENT SPECIFICATION**

(45) Date of publication and mention
of the grant of the patent:
**12.05.2021 Bulletin 2021/19**

(21) Application number: **16895356.0**

(22) Date of filing: **23.03.2016**

(51) Int Cl.:
*H02P 9/30* (2006.01)      *H02P 27/00* (2006.01)
*H02P 27/06* (2006.01)      *H02P 27/16* (2006.01)

(86) International application number:
**PCT/JP2016/059082**

(87) International publication number:
**WO 2017/163320 (28.09.2017 Gazette 2017/39)**

(54) **POWER CONVERSION DEVICE AND POWER CONVERSION METHOD**

STROMWANDLERVORRICHTUNG UND STROMUMWANDLUNGSVERFAHREN

DISPOSITIF ET PROCÉDÉ DE CONVERSION D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.01.2019 Bulletin 2019/05**

(73) Proprietor: **Hitachi Industrial Equipment Systems
Co., Ltd.
Tokyo 101-0022 (JP)**

(72) Inventors:
• **SUGIMOTO, Takuya
Tokyo 101-0022 (JP)**

• **ONUMA, Yusaku
Tokyo 101-0022 (JP)**

(74) Representative: **MERH-IP Matias Erny Reichl
Hoffmann
Patentanwälte PartG mbB
Paul-Heyse-Strasse 29
80336 München (DE)**

(56) References cited:
WO-A1-2015/045529    WO-A1-2015/159376
JP-A- H10 285 982    JP-A- 2005 348 478
JP-A- 2007 244 053

## Description

[Technical Field]

The present invention relates to a power conversion device and a power conversion method for converting DC or AC input voltage to arbitrary AC voltage.

[Background Art]

Japanese Patent Application Laid-Open Publication No. H10-285982 (Patent Literature 1) discloses a background art of the field of art to which the present invention belongs. This publication discloses that "a current-polarity detector 17 detects polarity of winding current of a motor 8 based on the presence of a current flowing through a transistor T4, and a current phase-difference detecting section 15 detects phase difference $\theta i$ of the winding currents iu, iv and iw of the motor 8 to the output voltage V of an inverter main circuit 7 on the basis of the polarity of the detecting section 15 and conductive signals Du, Dv and Dw. An induced-voltage phase-difference processing section 11 arithmetically calculates the phase difference $\theta e$ of the induced voltage E of the motor 8 to output voltage V on the basis of current phase difference $\theta i$, a conductive-signal generating section 10 generates the conductive signals Du, Dv and Dw having the amplitude of voltage ratios corresponding to sine waves from a frequency command fe when a frequency-command determining section 13 determines the frequency command fe from the difference of the phase difference $\theta e$ and the current phase difference $\theta i$, and the motor 8 is driven through the inverter main circuit 7 (refer to abstract).

[Citation List]

[Patent Literature]

[0003]

　　[PTL 1]
　　Japanese Patent Application Laid-Open Publication
　　No. H10-285982
　　[PTL 2]
　　WO 2015/159376 A1
　　[PTL 3]
　　WO 2015/045529 A1

[Summary of Invention]

[Technical Problem]

Patent Literature 1 discloses an art of calculating the frequency of a motor based on current phase and voltage phase. However, according to the art disclosed in Patent Literature 1, if noise is mixed in and superposed on the detected current or voltage, noise will also appear in the calculated phase, so that the calculated phase and the frequency based thereon are not accurate.

Therefore, the present invention provides a power conversion device configured to enable calculation of an accurate phase compared to the background art including the art taught in Patent Literature 1, even if noise is mixed in and superposed on the detected current or voltage.

PTL 2 describes a power conversion apparatus and a power conversion method. It provides a power conversion device capable of determining the rotational state quickly, easily and reliably while the rotor of the electric motor is idling.

PTL 3 describes a power conversion apparatus and a power conversion method. In particular, the power converter includes a semiconductor switching element that converts a DC voltage to an arbitrary voltage according to a combination of ON and OFF of the semiconductor switching element to drive the AC motor.

[Solution to Problem]

The present invention is defined by the apparatus claim 1 and the method claim 5.

In order to solve the above-described problem, the power conversion device according to the present invention provides a linear function conversion unit configured to convert a detected or estimated electric signal to a linear function representing a time displacement of phase of the electric signal, a gradient extraction unit configured to extract a gradient from the linear function converted by the linear function conversion unit, an intercept extraction unit configured to extract an intercept from the linear function converted by the linear function conversion unit, a filter processing unit comprising at least either a gradient filter processing unit configured to perform filter processing on the gradient extracted by the gradient extraction unit or an intercept filter processing unit configured to perform filter processing on the intercept extracted by the intercept extraction unit, a linear function inverse conversion unit configured to regain a linear function, using the gradient on which the filter processing has been performed by the gradient filter processing unit and the intercept on which the filter processing has been performed by the intercept filter processing unit in a case where the filter processing unit comprises the gradient filter processing unit and the intercept filter processing unit, or using the gradient or the intercept on which the filter processing has been performed by the gradient filter processing unit or the intercept filter processing unit and the gradient or the intercept extracted by the gradient extraction unit or the intercept extraction unit as gradient or intercept on which the filter processing has not been performed in a case where the filter processing unit comprises the gradient filter processing unit or the intercept filter processing unit, and a phase inverse conversion unit configured to return the linear function inversely converted by the linear function inverse conversion unit to a time displacement of the phase, wherein an output voltage of the power conversion device is controlled using a inversely converted phase that is inversely converted by the phase inverse conversion unit.

[Advantageous Effects of Invention]

The present invention provides a power conversion device that enables to remove the influence of noise by providing a filter processing while calculating a phase and perform drive control using the accurate phase, even if noise is mixed in a detected or estimated current or voltage.

Problems, configurations and effects other than those described above will become apparent from the description of the embodiments described below.

[Brief Description of Drawings]

[FIG. 1] FIG. 1 is a view illustrating an example of configuration of a power conversion device according to the present embodiment.
[FIG. 2] FIG. 2 is a view illustrating one example of configuration of a phase calculation unit 108 of the power conversion device according to the embodiment.
[FIG. 3] FIG. 3 is a view illustrating an operation mode of converting a phase to a ramp phase using a linear function conversion unit 202 in a phase calculation unit 108.
[FIG. 4] FIG. 4 is a view illustrating an operation mode of performing phase inverse conversion of a ramp filter phase using a phase inverse conversion unit 208 in the phase calculation unit 108.

[Description of Embodiments]

Now, an embodiment of the present invention will be described with reference to the drawings.

First Embodiment

In the present embodiment, a configuration example of a power conversion device enabling to calculate phase more accurately even if noise is mixed in the detected or estimated current will be described.

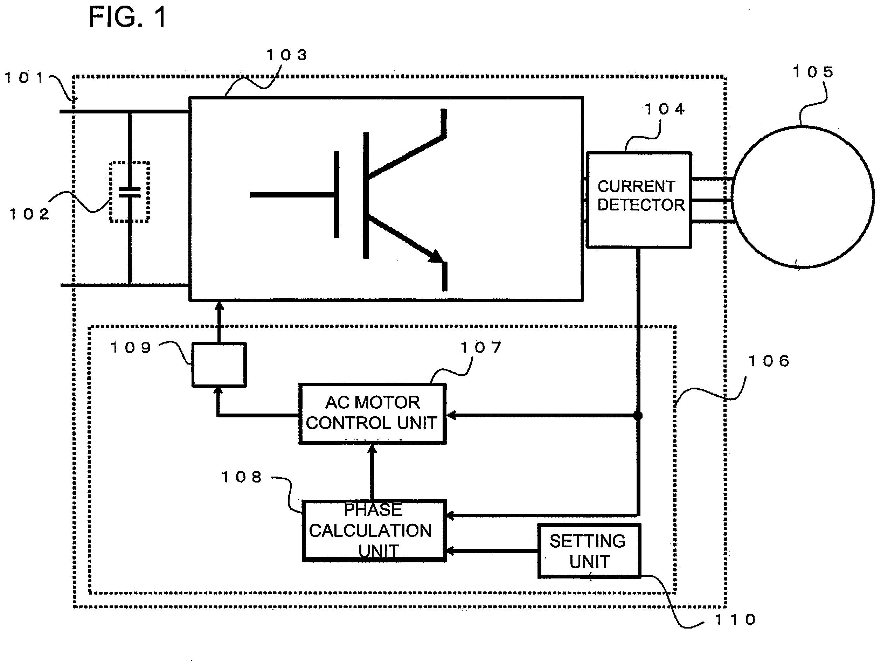

FIG. 1 illustrates an example of configuration of a power conversion device according to the first embodiment.

A power conversion device 101 configured to drive an AC motor 105 includes a smoothing capacitor 102, a power converter 103, a current detector 104 and a control unit 106.

The smoothing capacitor 102 is a smoothing capacitor for smoothing DC voltage. It is also possible to enter the DC voltage directly without intervening the smoothing capacitor.

The power converter 103 is composed of a semiconductor switching element, and according to the combination of on and off of the semiconductor switching element, the input DC voltage is converted to a voltage of an arbitrary frequency. The present embodiment illustrates the above-described configuration as an example, but it is also possible to convert the input as AC voltage to a voltage of an arbitrary frequency. In that case, the input AC voltage can be a three-phase AC voltage or a single-phase AC voltage.

The current detector 104 may be a shunt resistance or a hole CT, for example, and detects three-phase output current of the power converter 103. It may be possible to detect only two phases and compute the remaining phase, since the sum of three-phase AC is zero. Further, it may also be possible to arrange a shunt resistance to a positive electrode or negative electrode on the input side of the power converter 103, and estimate the three-phase output current based on the current flowing to the shunt resistance.

The control unit 106 is composed of an AC motor control unit 107, a phase calculation unit 108, a gate signal control unit 109 and a setting unit 110.

The AC motor control unit 107 outputs a voltage command based on the three-phase output current to control the speed or torque of the AC motor 105 arbitrarily.

The phase calculation unit 108 uses a time constant of filter set by the setting unit 110 and a three-phase output current detected by the current detector 104 as input, and outputs the phase information to which the filter processing has been performed to the AC motor control unit 107.

The gate signal control unit 109 receives the voltage command from the AC motor control unit 107, and controls on/off of the semiconductor switching element constituting the power converter 103 so that voltage based on the received voltage command is applied to the AC motor 105.

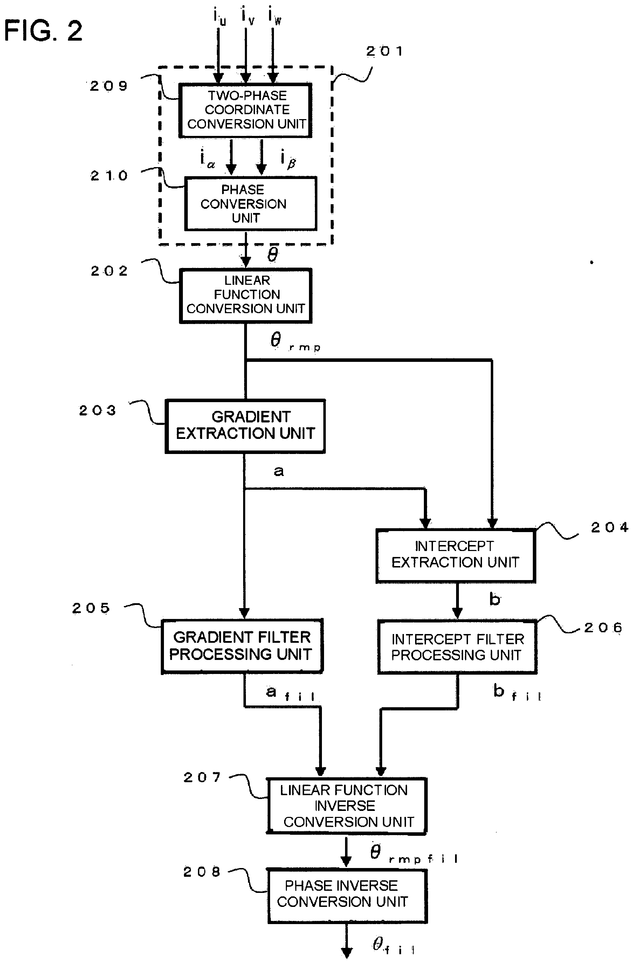

FIG. 2 is a view illustrating one example of a configuration of the phase calculation unit 108 of the power conversion device illustrated in FIG. 1.

The phase calculation unit 108 is composed of a phase generation unit 201, a linear function conversion unit 202, a gradient extraction unit 203, an intercept extraction unit 204, a gradient filter processing unit 205, an intercept filter processing unit 206, a linear function inverse conversion unit 207 and a phase inverse conversion unit 208.

In a case where three-phase output current $i_u$, $i_v$ and $i_w$ are entered, for example, the phase generation unit 201 is composed of a two-phase coordinate conversion unit 209 and a phase conversion unit 210. The two-phase coordinate conversion unit 209 converts three-phase output current iu, iv and iw to two-phase output current $i_\alpha$ and $i_\beta$, and the phase conversion unit 210 con-

**EP 3 435 539 B1**

verts the two-phase output current $i_\alpha$ and $i_\beta$ to phase $\theta$. In the present embodiment, conversion is performed to the result of conversion of the two-phase coordinate to phase $\theta$, but it is also possible to perform conversion to the result of conversion of the two-phase coordinate conversion result to two-phase rotary coordinate system and then to phase $\theta$. Even further, it is also possible to perform conversion directly from three-phase output to phase $\theta$.

Next, an operation mode executed by the linear function conversion unit 202 will be described.

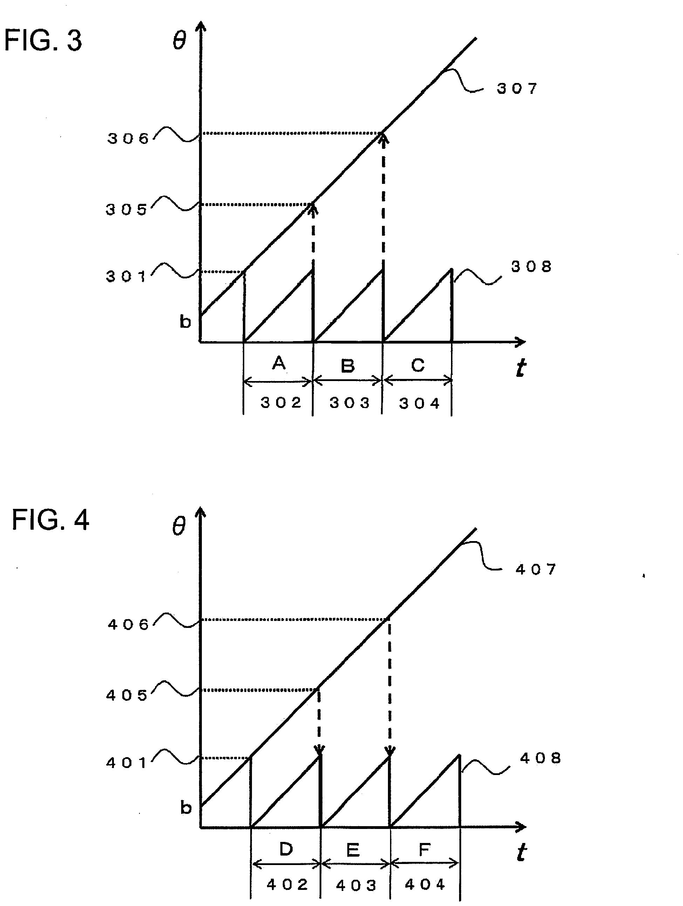

FIG. 3 is a view illustrating a state of time variation of phase and an operation mode in which the linear function conversion unit 202 converts the phase to a ramp phase. A phase $\theta$ 308 entered from the phase conversion unit 210 generally repeats an operation of being returned to initial phase after reaching a phase corresponding to one cycle 301. That is, the waveform will be a sawtooth waveform. Thus, in section A 302, if the phase reaches the phase corresponding to one cycle 301, the phase will not be returned to the initial phase, and operation is performed to add the former phase corresponding to one cycle 301 to the phase corresponding to one cycle in section A. Next, in section B 303, control is performed in a similar manner, wherein a phase corresponding to two cycles 305 in section A is added, and in section C 304, control is performed to add a phase corresponding to three cycles 306 in section B. By repeating this operation, the sawtooth waveform is converted to a ramp phase $\theta_{rmp}$ 307.

The ramp phase $\theta_{rmp}$ 307 converted by the linear function conversion unit 202 is entered to the gradient extraction unit 203 and the intercept extraction unit 204.

The gradient extraction unit 203 extracts gradient a from the ramp phase $\theta_{rmp}$ 307 illustrated in FIG. 3. Gradient a can be extracted (calculated), based on calculation using Expression 1 shown below. In Expression 1, $\Delta\theta_{rmp}$ represents phase increment value per unit time, and $\Delta t$ represents unit time. As can be seen from Expression 1, gradient a represents frequency of phase, that is, frequency of original signal (in the present embodiment, current signal entered to the phase generation unit 201 in FIG. 2).

[Expression 1]

$$a = \frac{\Delta\theta_{rmp}}{\Delta t}$$

Meanwhile, the intercept extraction unit 204 extracts intercept b from the ramp phase $\theta_{rmp}$ 307 illustrated in FIG. 3 and the gradient a extracted by the gradient extraction unit 203. Intercept b can be extracted (calculated) based on calculation using Expression 2 shown below. In Expression 2, t represents time. As can be seen from Expression 2, intercept b represents the size of the phase at the time detection is started.

[Expression 2]

$$b = \theta_{rmp} - (a \times t)$$

The gradient a extracted by the gradient extraction unit 203 is subjected to low-pass filter processing by the gradient filter processing unit 205. The gradient a to which filter processing has been performed is called "filter gradient $a_{ftl}$". Further, the intercept b extracted by the intercept extraction unit 204 is subjected to low-pass filter processing by the intercept filter processing unit 206. The intercept b to which the filter processing has been performed is called "filter intercept bfii".

Values set by the user arbitrarily using parameters and the like in the setting unit 110 are used as time constant of filter used in the gradient filter processing unit 205 and time constant of filter used in the intercept filter processing unit 206. Predetermined values can be used for both time constants instead of the values set in the setting unit 110.

Processes using a low-pass filter have been illustrated as the filter processing performed in the gradient filter processing unit 205 and the intercept filter processing unit 206, but for example, a filter processing using a band-pass filter may be performed if necessary.

Further, a configuration example has been illustrated of a case where filter processing is performed to both the extracted gradient a and intercept b, but it is possible to perform filter processing only to gradient a and use the extracted intercept b without performing filter processing thereto, or in contrast, to perform filter processing only to intercept b and use the extracted gradient a without performing filter processing thereto.

The linear function inverse conversion unit 207 uses gradient $a_{fil}$ and intercept $b_{fil}$ to which filter processing have been performed as input and performs inverse conversion to ramp filter phase $\theta_{rmpfil}$.

Next, we will describe the operation mode executed by the phase inverse conversion unit 208 in the phase calculation unit 108. FIG. 4 is a view illustrating an operation mode in which the phase inverse conversion unit 208 performs phase inverse conversion of a ramp filter phase $\theta_{rmpfil}$ 407. In order to convert the ramp filter phase $\theta_{rmpfil}$ 407 to a general phase waveform (sawtooth waveform), a phase corresponding to one cycle 401 is subtracted from the ramp filter phase $\theta_{rmpfil}$ 407 in section D 402. Similarly, a phase corresponding to two cycles 405 is subtracted from the ramp filter phase $\theta_{rmpfil}$ 407 in section E 403. Then, a phase corresponding to three cycles 406 is subtracted from the ramp filter phase $\theta_{rmpfil}$ 407 in section F 404. Thus, the phase can be converted to inversely converted phase $\theta_{fil}$ 408.

As described, the AC motor control unit 107 performs drive control of the AC motor 105 using the filter phase $\theta_{fil}$ calculated by the phase calculation unit 108. That is, the AC motor control unit 107 performs control using a phase from which noise has been removed through filter processing, so that the influence of noise mixed in and superposed on the detection signal is suppressed compared to the prior art, and a more accurate drive control of the AC motor 105 is enabled.

The gradient a extracted by the gradient extraction unit 203 and the filter gradient $a_{fil}$ derived by the gradient filter processing unit 205 are phase increment values per unit time. In other words, it represents the frequency of that phase. Thereby, the AC motor 105 can be controlled using not only the inversely converted phase $\theta_{fil}$ 408 but also the gradient a or the filter gradient $a_{fil}$ with respect to the AC motor control unit 107.

According further to the present embodiment, an example has been illustrated of a case where a detected or estimated current is used, and for example, a similar processing can be performed to a phase obtained by detected or estimated voltage based on induced voltage generated by the AC motor or residual voltage detected by a voltage detector and applying the same to the control of the AC motor. Further, a similar processing can also be performed to a phase obtained from various signals detected or estimated by a speed detector that detects the speed of the AC motor or a position detector that detects the position of the AC motor, and applying the same to the control of the AC motor. Moreover, the present invention can also be applied to phases respectively obtained by using a plurality of signals representing the above-described current, voltage, speed and position.

The above-described embodiment illustrates case where the invention is applied to the AC motor, but the present invention can be applied to motors in general, and it can similarly be applied to generators or power supplies.

[Reference Signs List]

101: Power conversion device, 102: smoothing capacitor, 103: power converter,
104: current detector, 105: AC motor, 106: control unit, 107: AC motor control unit,
108: phase calculation unit, 109: gate signal control unit, 110: setting unit,
201: phase generation unit, 202: linear function conversion unit,
203: gradient extraction unit, 204: intercept extraction unit, 205: gradient filter processing unit, 206: intercept filter processing unit, 207: linear function inverse conversion unit,
208: phase inverse conversion unit, 209: two-phase coordinate conversion unit,
210: phase conversion unit, 301, 401: phase corresponding to one cycle, 302: section A,
303: section B, 304: section C, 305, 405: phase corresponding to two cycles,

306, 406: phase corresponding to three cycles, 307: ramp phase $\theta_{rmp}$, 308: phase $\theta$,
402: section D, 403: section E, 404: section F, 407: ramp filter phase $\theta_{rmpfil}$,
408: inversely converted phase $\theta_{fil}$

**Claims**

1. A power conversion device (101) for converting a DC or AC input voltage to a voltage having arbitrary frequency, the power conversion device (101) **characterized by** comprising:

   a linear function conversion unit (202) configured to convert a detected or estimated electric signal to a linear function representing a time displacement of phase of the electric signal;
   a gradient extraction unit (203) configured to extract a gradient from the linear function converted by the linear function conversion unit (202);
   an intercept extraction unit (204) configured to extract an intercept from the linear function converted by the linear function conversion unit (202) and the gradient extracted by the gradient extraction unit (203), wherein the intercept represents the size of the phase at a time detection is started;
   a filter processing unit comprising at least either a gradient filter processing unit (205) configured to perform filter processing on the gradient extracted by the gradient extraction unit (203) or an intercept filter processing unit (206) configured to perform filter processing on the intercept extracted by the intercept extraction unit (204);
   a linear function inverse conversion unit (207) configured to regain a linear function, using the gradient on which the filter processing has been performed by the gradient filter processing unit (205) and the intercept on which the filter processing has been performed by the intercept filter processing unit (205) in a case where the filter processing unit comprises the gradient filter processing unit (205) and the intercept filter processing unit (206), or using the gradient or the intercept on which the filter processing has been performed by the gradient filter processing unit (203) or the intercept filter processing unit (206) and the gradient or the intercept extracted by the gradient extraction unit (203) or the intercept extraction unit (204) as gradient or intercept on which the filter processing has not been performed in a case where the filter processing unit comprises the gradient filter processing unit (205) or the intercept filter processing unit (206); and
   a phase inverse conversion unit (208) configured to return the linear function inversely converted by the linear function inverse conversion unit (207) to a time displacement of the phase, wherein an output voltage of the power conversion device (101) is controlled using a inversely converted phase that is inversely converted by the phase inverse conversion unit (208).

2. The power conversion device according to claim 1, wherein the detected or estimated electric signal is at least either an output current or the output voltage of the power conversion device (101), or speed or position of a motor or a generator driven by the power conversion device, or a frequency of power supply.

3. The power conversion device according to claim 1 or claim 2,
wherein a filter used in the gradient filter processing unit (205) and the intercept filter processing unit (206) is a low-pass filter or a band-pass filter.

4. The power conversion device according to any one of claims 1 through 3,
wherein a time constant of filter of the gradient filter processing unit (205) and the intercept filter processing unit (206) is a value set arbitrarily.

5. A method for controlling a power conversion device (101) for converting a DC or AC input voltage to a voltage having arbitrary frequency, the method **characterized by** comprising:

    a first step of converting a time displacement of phase of a detected or estimated electric signal to a linear function;
    a second step of extracting a gradient and an intercept from the linear function converted in the first step, wherein the intercept is extracted from the linear function and the gradient, and the intercept represents the size of the phase at a time detection is started;
    a third step of performing a filter processing on at least either the gradient or the intercept extracted in the second step;
    a fourth step of performing inverse conversion to regain a linear function, using the gradient and the intercept on which the filter processing has been performed if the filter processing has been performed on the gradient and the intercept in the third step, or using both the gradient or the intercept on which the filter processing has been performed and the gradient or the intercept extracted in the second step as gradient or intercept on which the filter processing has not been performed if the filter processing has been performed on the gradient or the intercept in the third step;
    a fifth step of performing inverse conversion to return the linear function on which inverse conversion has been performed in the fourth step to the time displacement of phase; and
    a sixth step of controlling an output voltage of the power conversion device (101) using the inversely converted phase that has been inversely converted in the fifth step.

6. The method for controlling a power conversion device according to claim 5,
wherein the detected or estimated electric signal is at least either an output current or the output voltage of the power conversion device (101), or speed or position of a motor or a generator driven by the power conversion device, or a frequency of power supply.

7. The method for controlling a power conversion device according to claim 5 or claim 6,
wherein a filter processing performed in the third step is a low-pass filter processing or a band-pass filter processing.

8. The method for controlling a power conversion device according to any one of claims 5 through 7,
wherein a time constant of filter of the filter processing unit performed in the third step is a value set arbitrarily.

**Patentansprüche**

1. Leistungsumsetzungsvorrichtung (101) zum Umsetzen einer Gleichstrom- oder einer Wechselstromeingangsspannung in eine Spannung mit einer beliebigen Frequenz, wobei die Leistungsumsetzungsvorrichtung (101) **gekennzeichnet ist durch**:

    eine Einheit zur Umsetzung in eine lineare Funktion (202), die konfiguriert ist, ein detektiertes oder geschätztes elektrisches Signal in eine lineare Funktion umzusetzen, die eine Zeitverschiebung der Phase des elektrischen Signals repräsentiert;
    eine Gradientenextraktionseinheit (203), die konfiguriert ist, einen Gradienten aus der linearen Funktion, die **durch** die Einheit zur Umsetzung in eine lineare Funktion (202) umgesetzt wurde, zu extrahieren;
    eine Schnittpunktextraktionseinheit (204), die konfiguriert ist, einen Schnittpunkt aus der **durch** die Einheit zur Umsetzung in eine lineare Funktion (202) umgesetzten linearen Funktion und dem **durch** die Gradientenextraktionseinheit (203) extrahierten Gradienten zu extrahieren, wobei der Schnittpunkt die Größe der Phase zu dem Zeitpunkt, zu dem die Detektion gestartet wird, repräsentiert;
    eine Filterverarbeitungseinheit, die zumindest entweder eine Gradientenfilterverarbeitungseinheit (205), die konfiguriert ist, eine Filterverarbeitung an dem **durch** die Gradientenextraktionseinheit (203) extrahierten Gradienten auszuführen, oder eine Schnittpunktfilterverarbeitungseinheit (206), die konfiguriert ist, eine Filterverarbeitung an dem **durch** die Schnittpunktextraktionseinheit (204) extrahierten Schnittpunkt auszuführen;

eine Einheit zur inversen Umsetzung der linearen Funktion (207), die konfiguriert ist, eine lineare Funktion unter Verwendung des Gradienten, an dem die Filterverarbeitung **durch** die Gradientenfilterverarbeitungseinheit (205) ausgeführt wurde, und des Schnittpunkts, an dem die Filterverarbeitung **durch** die Schnittpunktfilterverarbeitungseinheit (205) ausgeführt wurde, in einem Fall, in dem die Filterverarbeitungseinheit die Gradientenfilterverarbeitungseinheit (205) und die Schnittpunktfilterverarbeitungseinheit (206) umfasst, oder unter Verwendung des Gradienten oder des Schnittpunkts, an dem die Filterverarbeitung **durch** die Gradientenfilterverarbeitungseinheit (203) oder die Schnittpunktfilterverarbeitungseinheit (206) ausgeführt wurde, und des Gradienten oder des Schnittpunkts, der **durch** die Gradientenextraktionseinheit (203) oder die Schnittpunktextraktionseinheit (204) als Gradient oder Schnittpunkt extrahiert wurde, an dem die Filterverarbeitung nicht ausgeführt wurde, in einem Fall, in dem die Filterverarbeitungseinheit die Gradientenfilterverarbeitungseinheit (205) oder die Schnittpunktfilterverarbeitungseinheit (206) umfasst, wiederzugewinnen, und

eine Phasenumkehrumsetzungseinheit (208), die konfiguriert ist, die lineare Funktion, die **durch** die Einheit zur inversen Umsetzung der linearen Funktion (207) invers umgesetzt wurde, in eine Zeitverschiebung der Phase zurückzuführen,

wobei eine Ausgangsspannung der Leistungsumsetzungsvorrichtung (101) unter Verwendung einer invers umgesetzten Phase, die **durch** die Phasenumkehrumsetzungseinheit (208) umgesetzt wurde, gesteuert wird.

2. Leistungsumsetzungsvorrichtung nach Anspruch 1, wobei das detektierte oder geschätzte elektrische Signal zumindest entweder ein Ausgangsstrom oder die Ausgangsspannung der Leistungsumsetzungsvorrichtung (101) oder eine Geschwindigkeit oder eine Position eines Motors oder eines Generators, der durch die Leistungsumsetzungsvorrichtung angesteuert wird, oder eine Frequenz einer Stromversorgung ist.

3. Leistungsumsetzungsvorrichtung nach Anspruch 1 oder Anspruch 2,

wobei ein Filter, das in der Gradientenfilterverarbeitungseinheit (205) und der Schnittpunktfilterverarbeitungseinheit (206) verwendet wird, ein Tiefpassfilter oder ein Bandpassfilter ist.

4. Leistungsumsetzungsvorrichtung nach einem der Ansprüche 1 bis 3,
wobei eine Zeitkonstante des Filters der Gradientenfilterverarbeitungseinheit (205) und der Schnittpunktfilterverarbeitungseinheit (206) ein Wert ist, der willkürlich eingestellt ist.

5. Verfahren zum Steuern einer Leistungsumsetzungsvorrichtung (101) zum Umsetzen einer Gleichstrom- oder Wechselstromeingangsspannung in eine Spannung mit einer beliebigen Frequenz, wobei das Verfahren **gekennzeichnet ist durch**:

einen ersten Schritt des Umsetzens einer Zeitverschiebung der Phase eines detektierten oder geschätzten elektrischen Signals in eine lineare Funktion;

einen zweiten Schritt des Extrahierens eines Gradienten und eines Schnittpunkts aus der in dem ersten Schritt umgesetzten linearen Funktion, wobei der Schnittpunkt aus der linearen Funktion und dem Gradienten extrahiert wird und der Schnittpunkt die Größe der Phase zu dem Zeitpunkt, zu dem die Detektion gestartet wird, repräsentiert;

einen dritten Schritt des Ausführens einer Filterverarbeitung zumindest entweder an dem Gradienten oder dem Schnittpunkt, die in dem zweiten Schritt extrahiert wurden;

einen vierten Schritt des Ausführens einer inversen Umsetzung, um eine lineare Funktion unter Verwendung des Gradienten und des Schnittpunkts, an dem die Filterverarbeitung ausgeführt wurde, wenn die Filterverarbeitung an dem Gradienten und dem Schnittpunkt in dem dritten Schritt ausgeführt wurde, oder unter Verwendung sowohl des Gradienten als auch des Schnittpunkts, an dem die Filterverarbeitung ausgeführt wurde, und des Gradienten oder des Schnittpunkts, der in dem zweiten Schritt extrahiert wurde, als Gradient oder Schnittpunkt, an dem die Filterverarbeitung nicht ausgeführt wurde, wenn die Filterverarbeitung an dem Gradienten oder dem Schnittpunkt in dem dritten Schritt ausgeführt wurde, wiederzugewinnen;

einen fünften Schritt des Ausführens einer inversen Umsetzung, um die lineare Funktion, an der die inverse Umsetzung in dem vierten Schritt ausgeführt wurde, in die Zeitverschiebung der Phase zurückzuführen; und

einen sechsten Schritt des Steuerns einer Ausgangsspannung der Leistungsumsetzungsvorrichtung (101) unter Verwendung der invers umgesetzten Phase, die in dem fünften Schritt invers umgesetzt wurde.

6. Verfahren zum Steuern einer Leistungsumsetzungsvorrichtung nach Anspruch 5, wobei das detektierte oder geschätzte elektrische Signal zumindest entweder ein Ausgangsstrom oder die Ausgangsspannung der Leistungsumsetzungsvorrichtung (101) oder eine Geschwindigkeit oder eine Position eines Motors oder eines Generators, der durch die Leistungsumsetzungsvorrichtung angesteuert wird, oder eine Frequenz einer Stromversorgung ist.

7. Verfahren zum Steuern einer Leistungsumsetzungsvorrichtung nach Anspruch 5 oder Anspruch 6, wobei eine Filterverarbeitung, die in dem dritten Schritt ausgeführt wird, eine Tiefpassfilterverarbeitung oder eine Bandpassfilterverarbeitung ist.

8. Verfahren zum Steuern einer Leistungsumsetzungsvorrichtung nach einem der Ansprüche 5 bis 7, wobei eine Zeitkonstante des Filters der Filterverarbeitungseinheit, die in dem dritten Schritt ausgeführt wird, ein willkürlich eingestellter Wert ist.

**Revendications**

1. Dispositif de conversion de puissance (101) destiné à convertir une tension d'entrée en courant continu (CC) ou alternatif (CA) en une tension ayant une fréquence arbitraire, le dispositif de conversion de puissance (101) étant **caractérisé en ce qu'**il comprend :

   une unité de conversion de fonction linéaire (202) configurée pour convertir un signal électrique détecté ou estimé en une fonction linéaire représentant un déplacement temporel de phase du signal électrique ;
   une unité d'extraction de gradient (203) configuré pour extraire un gradient à partir de la fonction linéaire convertie par l'unité de conversion de fonction linéaire (202) ;
   une unité d'extraction d'interception (204) configurée pour extraire une interception à partir de la fonction linéaire convertie par l'unité de conversion de fonction linéaire (202) et du gradient extrait par l'unité d'extraction de gradient (203), dans laquelle l'interception représente la taille de la phase au moment où la détection est démarrée ;
   une unité de processus de filtrage comprenant au moins soit une unité de processus de filtrage de gradient (205) configurée pour exécuter un processus de filtrage sur le gradient extrait par l'unité d'extraction de gradient (203), soit une unité de processus de filtrage d'interception (206) configurée pour exécuter un processus de filtrage sur l'interception extraite par l'unité d'extraction d'interception (204) ;
   une unité de conversion inverse de fonction linéaire (207) configurée pour récupérer une fonction linéaire, en utilisant le gradient sur lequel le processus de filtrage a été exécuté par l'unité de processus de filtrage de gradient (205) et l'interception sur laquelle le processus de filtrage a été exécuté par l'unité de processus de filtrage d'interception (205) dans un cas où l'unité de processus de filtrage comprend l'unité de processus de filtrage de gradient (205) et l'unité de processus de filtrage d'interception (206), ou en utilisant le gradient ou l'interception sur lequel/laquelle le processus de filtrage a été exécuté par l'unité de processus de filtrage de gradient (203) ou l'unité de processus de filtrage d'interception (206) et le gradient ou l'interception extrait(e) par l'unité d'extraction de gradient (203) ou l'unité d'extraction d'interception (204) à titre de gradient ou d'interception sur lequel/laquelle le processus de filtrage n'a pas été exécuté dans un cas où l'unité de processus de filtrage comprend l'unité de processus de filtrage de gradient (205) ou l'unité de processus de filtrage d'interception (206) ; et
   une unité de conversion inverse de phase (208) configurée pour renvoyer la fonction linéaire inversement convertie par l'unité de conversion inverse de fonction linéaire (207) à un déplacement temporel de la phase,
   dans lequel une tension de sortie du dispositif de conversion de puissance (101) est commandée en utilisant une phase inversement convertie qui est inversement convertie par l'unité de conversion inverse de phase (208).

2. Dispositif de conversion de puissance selon la revendication 1, dans lequel le signal électrique détecté ou estimé est au moins soit un courant de sortie ou la tension de sortie du dispositif de conversion de puissance (101), soit une vitesse ou une position d'un moteur ou d'une génératrice entraînés par le dispositif de conversion de puissance, soit encore une fréquence de l'alimentation de puissance.

3. Dispositif de conversion de puissance selon la revendication 1 ou 2, dans lequel un filtre utilisé dans l'unité de processus de filtrage de gradient (105) et l'unité de processus de filtrage d'interception (206) est un filtre passe-bas ou un filtre passe-bande.

4. Dispositif de conversion de puissance selon l'une quelconque des revendications 1 à 3,

dans lequel une constante de temps de filtrage de l'unité de processus de filtrage de gradient (205) et de l'unité de processus de filtrage d'interception (206) est une valeur fixée arbitrairement.

5. Procédé pour commander un dispositif de conversion de puissance (101) destiné à convertir une tension d'entrée en courant CC ou CA en une tension ayant une fréquence arbitraire, le procédé étant **caractérisé en ce qu'**il comprend :

une première étape consistant à convertir un déplacement temporel de phase d'un signal électrique détecté ou estimé en une fonction linéaire ;

une deuxième étape consistant à extraire un gradient et une interception à partir de la fonction linéaire convertie dans la première étape, dans laquelle l'interception est extraite à partir de la fonction linéaire et du gradient, et l'interception représente la taille de la phase au moment où la détection est démarrée ;

une troisième étape consistant à exécuter un processus de filtrage sur au moins soit le gradient, soit l'interception extraits dans la deuxième étape ;

une quatrième étape consistant à exécuter une conversion inverse pour récupérer une fonction linéaire, en utilisant le gradient et l'interception sur lequel/laquelle le processus de filtrage a été exécuté si le processus de filtrage a été exécuté sur le gradient et l'interception dans la troisième étape, ou en utilisant à la fois le gradient ou l'interception sur lequel/laquelle le filtrage a été exécuté et le gradient ou l'interception extrait(e) dans la seconde étape à titre de gradient ou d'interception sur lequel/laquelle le processus de filtrage n'a pas été exécuté si le processus de filtrage a été exécuté sur le gradient ou l'interception dans la troisième étape ;

une cinquième étape consistant à exécuter une conversion inverse pour renvoyer la fonction linéaire sur laquelle la conversion inverse a été exécutée dans la quatrième étape au déplacement temporel de phase ; et

une sixième étape consistant à commander une tension de sortie du dispositif de conversion de puissance (101) en utilisant la phase inversement convertie qui a été inversement convertie dans la cinquième étape.

6. Procédé pour commander un dispositif de conversion de puissance selon la revendication 5, dans lequel le signal électrique détecté ou estimé est au moins soit un courant de sortie ou la tension de sortie du dispositif de conversion de puissance (101), soit une vitesse ou une position d'un moteur ou d'une génératrice entraînés par le dispositif de conversion de puissance, soit encore une fréquence de l'alimentation de puissance.

7. Procédé pour commander un dispositif de conversion de puissance selon la revendication 5 ou 6, dans lequel un processus de filtrage exécuté dans la troisième étape est un processus de filtrage passe bas ou passe-bande.

8. Procédé pour commander un dispositif de conversion de puissance selon l'une quelconque des revendications 5 à 7, dans lequel une constante de temps de filtrage de l'unité de processus de filtrage exécuté dans la troisième étape est une valeur fixée arbitrairement.

# FIG. 1

# FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10285982 B
- WO 2015159376 A1
- WO 2015045529 A1